# EUROPÄISCHE PATENTSCHRIFT

(11) **EP 1 668 771 B1**
(45) Veröffentlichungstag und Bekanntmachung des Hinweises auf die Patenterteilung: **24.11.2010**
(21) Anmeldenummer: 04765470.2
(22) Anmeldetag: 22.09.2004
(51) Int. Cl.: H02P 7/29

(54) **STEUERSCHALTUNG UND VERFAHREN ZUR ANSTEUERUNG EINES INDUKTIVEN ELEKTRISCHEN VERBRAUCHERS**
CONTROL CIRCUIT AND METHOD FOR CONTROLLING AN INDUCTIVE ELECTRIC CONSUMER
CIRCUIT DE COMMANDE ET PROCEDE POUR COMMANDER UN RECEPTEUR ELECTRIQUE INDUCTIF

(30) Priorität: 23.09.2003 DE 10344301
(43) Veröffentlichungstag der Anmeldung: 14.06.2006
(73) Patentinhaber: ROBERT BOSCH GMBH, 70442 Stuttgart (DE)
(72) Erfinder: PREIS, Karl, 77830 Bühlertal (DE)
(86) Internationale Anmeldenummer: PCT/EP2004/010596
(87) Internationale Veröffentlichungsnummer: WO 2005/031962

(56) Entgegenhaltungen:
- EP-A2- 0 240 172
- DE-A- 3 328 250
- FR-A- 2 062 554
- US-A1- 2003 062 861

## Beschreibung

Die Erfindung betrifft eine Steuerschaltung für einen induktiven, elektrischen Verbraucher, insbesondere einen Gleichstrommotor einer Lüftereinrichtung an einer Verbrennungskraftmaschine oder eines Klimagebläses in einem Kraftfahrzeug, mit einem ersten Schaltelement, das zusammen mit dem anschließbaren Verbraucher in Reihe zwischen zwei Anschlussklemmen für die Energieversorgung liegt.

Steuerschaltungen der vorgenannten Art sind allgemein bekannt. Sie werden beispielsweise zur Ansteuerung von Gleichstrommotoren eingesetzt, die Teil von Kühlgebläsen in Kraftfahrzeugen sind. Da die Kühlleistung dieser Gebläse nicht konstant sein muss, lässt sich die dem entsprechenden Gleichstrommotor zugeführte Leistung über die Steuerschaltung steuern bzw. regeln.

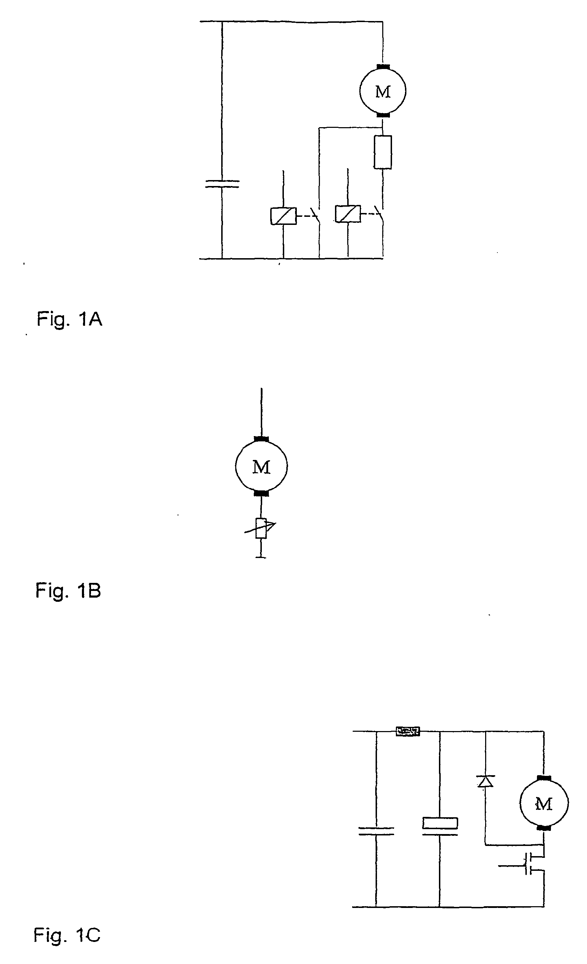

Zur Leistungssteuerung von Gleichstrommotoren gibt es unterschiedliche Lösungen, wobei einige wenige in Fig. 1A bis 1C angegeben sind. In der in Fig. 1A dargestellten Schaltung liegt der Gleichstrommotor M beispielsweise in Reihe zu einem Widerstand und einem mechanischen Schalter, der von einem Relais gebildet wird. Parallel zu der Reihenschaltung aus Widerstand und Relais liegt ein weiteres Relais, so dass die beiden Elemente der Reihenschaltung überdrückt werden können.

Diese Steuerschaltung ermöglicht es, den Gleichstrommotor M zweistufig zu betreiben, wobei die leistungsschwächere Stufe dann eingestellt ist, wenn der erste Schalter geschlossen und der zweite Schalter geöffnet ist.

Diese Schaltung hat den Nachteil, dass eine stufenlose Leistungssteuerung nicht möglich ist. Darüber hinaus sind zusätzliche Maßnahmen erforderlich, um die Schaltung vor Überhitzung zu schützen, wozu beispielsweise ein Stromsensor zählt.

Im Übrigen führt das Fehlen einer stufenlosen Leistungssteuerung dazu, dass ein Sanftanlauf nur mit zusätzlichen Schaltungsmaßnahmen möglich ist. Der Sanftanlauf von Lüftungsgebläsen in Kraftfahrzeugen gehört jedoch mittlerweile zu den üblichen Anforderungen an ein Kühlgebläse, um beispielsweise an Fußgängerüberwegen zu vermeiden, dass die Gebläse sich bei den stehenden Fahrzeu-gen plötzlich mit voller Leistung einschalten und durch die entstehende Lärmentwicklung Fußgänger erschrecken.

In Fig. 1B ist eine Schaltung angegeben, bei der ein Linearregler in Reihe mit dem zu steuernden Motor geschaltet ist. Der Linearregler ist auf Halbleiterbasis ausgeführt. Diese Ausführung hat den Nachteil, dass das Halbleiterbauelement stark belastet wird, damit viel Wärme produziert und altert.

Schließlich ist in Fig. 1C eine Anordnung gezeigt, bei der in Reihe zu dem zu steuernden Motor ein Schaltelement vorgesehen ist, das mit verschiedenen Frequenzen, bspw. mit 20 kHz, getaktet wird. Mittels einer Pulsweitenmodulation wird die Leistung des Motors eingestellt.

Der Nachteil dieser Anordnung ist insbesondere darin zu sehen, dass aufwendige EMV-Maßnahmen notwendig sind. Zusätzlich ist ein Verpolschutz notwendig, um eine Zerstörung von Bauteilen zu vermeiden. Schließlich ist ein Stromsensor zur Überwachung vorzusehen, um eine Beschädigung von Bauteilen zu verhindern.

Eine Steuerschaltung mit entsprechend verbesserten EKV-Maßnahmen zeigt die EP 0 240 172 A2. Dabei werden hochfrequente Störungen unter anderem durch einen in Reihe zu einem Schaltelement zur pulsweitenmodulierten Ansteuerung eines Gleichstrommotors geschalteten Widerstand begrenzt, wobei dieser Widerstand gleichzeitig auch zur Strombegrenzung des Gleichstrommotors dient.

Die DE 32 28 250 A1 offenbart eine Drehzahlregeleinrichtung für einen Gleichstrommotor mit einer Brückenschaltung, die durch den Gleichstrommotor und einer Mehrzahl von Widerständen gebildet ist. Ein Zweig der Brückenschaltung, der nicht direkt mit dem Gleichstrommotor verbunden ist, weist ein Widerstandsnetzwerk mit einem Thermistor auf. Auf diese Weise ist es möglich, eine Drehzahlregelung mit einer verringerten Temperaturabhängigkeit zu erreichen.

Aus der US 2003/0062861 ist eine Steuerschaltung für einen Gleichstrommotor, insbesondere für einen Gleichstrommotor eines Motorkühlgebläses, bekannt, bie der in Reihe zu edem Gleichstrommotor ein erstes Schaltelement in Reihe mit einem Widerstand und parallel zu dieser Reihenschaltung ein zweites Schaltelement geschaltet ist. Das erste Schaltelement dient dazu, den Gleichstrommotor mittels des Widerstands mit einem begrenzten Einschaltstrom hochlaufen zu lassen und ihn anschließend mit einer sehr geringen Drehzahl zu betreiben, die sich in Abhängigkeit vom Widerstandswert ergibt. Das zweite Schaltelement ist im Gegensatz zum ersten Schaltelement pulsweitenmoduliert angesteuert, so dass der Gleichstrommotor in Abhängigkeit vom Pulsweitenverhältnis mit unterschiedlichen Geschwindigkeiten bishin zur maximalen Drehzahl bei einem Pulsweitenverhältnis von 100 % betrieben werden kann.

### Aufgabenstellung

Es ist Aufgabe der vorliegenden Erfindung, eine Steuerschaltung für einen induktiven, elektrischen Verbraucher vorzusehen, die mit einfachen Mitteln zusätzlich eine Erkennung einer Blockierung des Verbrauchers ermöglicht.

Diese Aufgabe wird bei der eingangs genannten Steuerschaltung, bei der ein Widerstandselement in Reihe mit einem ersten Schaltelement und ein zweites Schaltelement parallel zu der Reihenschaltung aus Widerstandselement und erstem Schaltelement geschaltet ist, wobei eine Pulsweiten-Ansteuervorrichtung das zweite Schaltelement ansteuert und damit die Leistung des elektrischen Verbrauchers einstellt und wobei eine Signalaufbereitungs- und Spannungsmessvorrichtung vorgesehen ist, die parallel zu dem Widerstandselement liegt und den Spannungsabfall an diesem Widerstandselemente als Signal zur Weiterverarbeitung abgreift, dadurch gelöst, dass das Widerstandselement als PTC-Widerstand ausgebildet ist und dass die Signalaufbreitungs- und Spannungsmessvorrichtung bei einem Überschreiten der gemessenen Spannung über einen vorgegebenen Wert ein Steuersignal zum Abschalten des zumindest einen Schaltelements erzeugt.

Mit Hilfe dieser Steuerschaltung ist es möglich, den Verbraucher, insbesondere einen Gleichstrommotor, hinsichtlich seiner Leistung stufenlos einzustellen. Hierfür wird ein Ansteuerungssignal, das von der Pulsweiten-Ansteuerungsvorrichtung geliefert wird, pulsweitenmoduliert und an das zweite Schaltelement geführt. Bei dieser Schaltung kann beispielsweise die kleinste Drehzahlstufe (25 % Leis-tung) niedrig gewählt werden, um somit einen Sanftanlauf zu ermöglichen. Nach dem Einschalten über das erste Schaltelement wird der reguläre Arbeitspunkt des Verbrauchers durch Erhöhung der Pulsweiten-Modulation sanft angefahren.

Ferner ist es bei dieser Steuerschaltung möglich, gleiche Widerstände für verschiedene Verbraucherklassen bzw. Motorklassen zu verwenden, da der Arbeitspunkt durch entsprechendes Einstellen der Pulsweiten-Modulation des hnsteuprungssignals angepasst werden kann.

Gegenüber der in Fig. 1B gezeigten Schaltung bietet die erfinduhgsgemäße Steuerschaltung weiterhin den Vorteil, dass die Halbleiter oder Schaltelemente nicht stark belastet werden, da die Leistung im Widerstandselement in Wärme umgesetzt wird, wobei an dieser Stelle anzumerken ist, dass solche als Vorwiderstand dienenden Widerstandselemente höhere Temperaturen als Halbleiter verkraften und bezüglich hoher Lasten nicht so empfindlich sind wie Halbleiter.

Der Vorteil der erfindungsgemäßen Steuerschaltung gegenüber der in Fig. 1C dargestellten Schaltung besteht darin, dass aufwändige EMV-Maßnahmen nicht notwendig sind, sowie auf einen Verpolschutz verzichtet werden kann, da ein angeschlossener Gleichstrommotor im Verpolfall rückwärts läuft. Im Übrigen ist auch kein Stromsensor zur Überwachung notwendig.

Die Ausbildung des Widerstandselements als PTC-Widerstand hat den Vorteil, dass das Widerstandselement gegen Überhitzung geschützt werden kann. Ist der Gleichstrommotor beispielsweise blockiert, heizt sich das PTC-Widerstandselement bedingt durch den größeren Stromfluss auf und erhöht damit den Spannungsabfall an der Serienschaltung von Widerstandselement und erstem Schaltelement. Dieser Anstieg des Spannungsabfalls lässt sich detektieren und entsprechend auswerten.

Mit Hilfe der Signalaufbereitungs- und Spannungsmessvorrichtung ist es in vorteilhafter Weise möglich, den bereits zuvor erwähnten Spannungsabfall im Fehlerfall am Widerstandselement zu erfassen und entsprechende Gegenmaßnahmen, wie beispielsweise ein Abschalten des Verbrauchers durch Betätigen des zumindest ersten Schaltelements, vorzunehmen.

In einer bevorzugten Weiterbildung ist der Widerstandswert des Widerstandselements entsprechend dem Widerstandswert des Verbrauchers am Arbeitspunkt gewählt. Weiter bevorzugt wird das Widerstandselement gekühlt, vorzugsweise im Luftstrom des Gleichstrommotors. Diese Maßnahme hat den Vorteil, dass ein gesondertes Kühlelement nicht erforderlich ist, da der Verbraucher selbst die entsprechende Kühlung liefert.

In einer weiteren bevorzugten Ausführungsform ist das zweite Schaltelement ein Halbleiter-Schaltelement, insbesondere ein Feldeffekt-Transistor. Diese Maßnahme hat den Vorteil, dass ein besonders kostengünstiges Bauelement verwendbar ist, das auch bei hohen Schalttrequenzen arbeitet.

In einer bevorzugten Weiterbildung ist die PWM-Vorrichtung so ausgebildet, dass das zweite Schaltelement zumindest in bestimmten vorgebbaren Zeitabständen getaktet wird, um am Widerstandselement eine Mess-Spannung angreifen zu können.

Würde das zweite Schaltelement ständig mit einem 100 % Pulsweiten-modulierten Signal angesteuert, würde am Widerstandselement keine Spannung mehr abfallen- Die Signalaufbereitungs- und Spannungsmessvorrichtung könnte folglich keine Rückschlüsse mehr auf den fließenden Strom zehen. Dadurch, dass das zweite Schaltelement zumindest in bestimmten Zeitabständen getaktet wird, lässt sich in diesen Zeitabständen über den Spannungsabfall am Widerstandselement eine Strommessung durchführen.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nun beispielhaft an Hand eines Ausführungsbeispiels unter Bezugnahme auf die begleitenden Zeichnungen näher erläutert. Dabei zeigen:
- Fig. 1A-C: Blockschaltbilder verschiedener Steuerschaltungen aus dem Stand der Technik;
- Fig. 2: ein Blockschaltbild einer erfindungsgemäßen Steuer- schaltung; und
- Fig. 3: ein Blockschaltdiagramm der in Fig. 2 gezeigten erfindungsgemäßen Steuerschaltung mit einer zusätz- lichen Signalaufbereitungs- und Spannungsmessvorrich- tung.

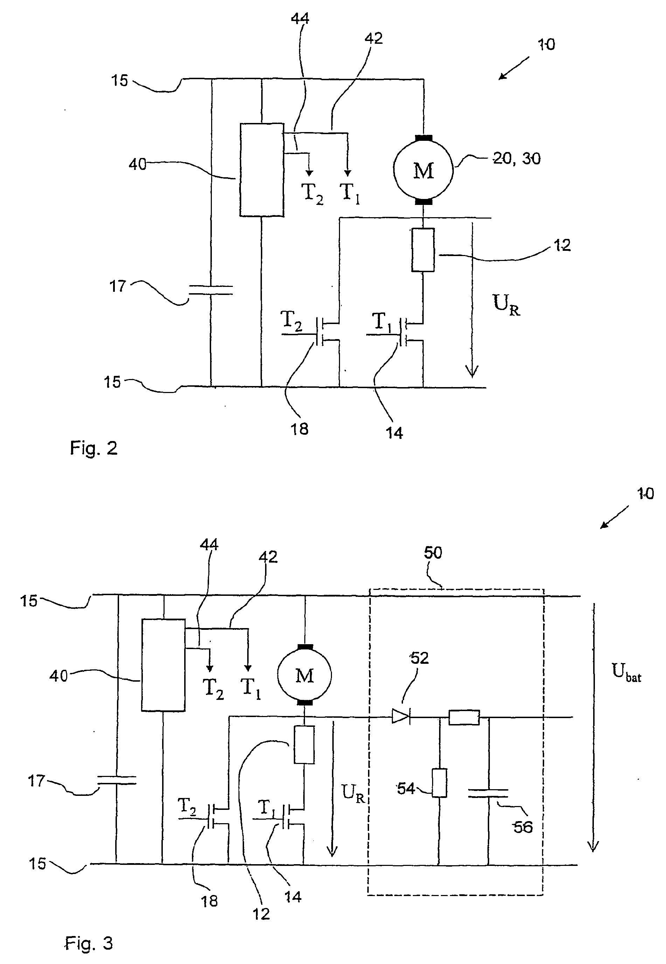

In Fig. 2 ist eine Steuerschaltung schematisch als Blockschaltbild dargestellt und mit dem Bezugszeichen 10 gekennzeichnet. Die Steuerschaltung 10 dient dazu, einen elektrischen Verbraucher 20, bei dem es sich im vorliegenden Ausführungsbeispiel um einen Gleichstrommotor 30 handelt, mit Energie zu versorgen. Der Gleichstrommotor 30 kann beispielsweise Teil eines Kühlgebläses für Kraftfahrzeuge sein. Die Versorgung des Gleichstrommotors 30 mit Energie kann über die Steuerschaltung 10 stufenlos erfolgen, so dass die Drehzahl des Gleichstrommotors 30 stufenlos regelbar ist.

In Reihe zu dem angeschlossenen Gleichstrommotor 30 liegt ein Widerstand 12 und ein erstes Schaltelement 14. Diese Reihenschaltung aus Gleichstrommotor 30, Widerstandselement 12 und Schaltelement 14 ist zwischen zwei Anschlussklemmen 15 angeschlossen. Diese Anschlussklemmen 15 sind im Falle eines Kühlgebläses in einem Kraftfahrzeug mit der Batterie und/oder dem Bordnetz verbunden. Damit liegt zwischen den beiden Anschlussklemmen 15 die Versorgungsspannung für den Gleichstrommotor 30 an.

Zwischen den beiden Anschlussklemmen 15 und damit parallel zu der vorgenannten Reihenschaltung liegt aus EMV-Gründen ein Kondensator 17, auf dessen genauere Funktion an dieser Stelle jedoch nicht weiter eingegangen werden soll.

Fig. 2 lässt noch erkennen, dass parallel zu der Reihenschaltung aus Widerstandselement 12 und Schaltelement 14 ein weiteres zweites Schaltelement 18 vorgesehen ist. Dieses Schaltelement ermöglicht somit eine überbrückung der Reihenschaltung aus Widerstandselement 12 und erstem Schaltelement 14.

Vorzugsweise handelt es sich bei den beiden Schaltelementen 14, 18 um Halbleiter-Schaltelemente, vorzugsweise FeldeffektTransistoren. Es sei an dieser Stelle jedoch erwähnt, dass auch andere Schaltelemente denkbar sind. So kann beispielsweise das erste Schaltelement 14 durch ein mechanisches Schaltelement, wie beispielsweise ein Relais, ersetzt werden.

Zur Ansteuerung der beiden Schaltelemente 14, 18 ist eine Ansteuerungsschaltung 40 vorgesehen, die zwei Ansteuerungssignale 42, 44 generiert. Wie aus Fig. 2 ersichtlich, wird das Ansteuerungssignal 42 dem ersten Schaltelement 14 und das andere Ansteuerungssignal 44 dem zweiten Schaltelement 18 zugeführt.

Bei dem ersten Ansteuerungssignal 42 handelt es sich um ein ungetaktetes Signal. Mit Hilfe dieses ersten Ansteuerungssignals wird lediglich der Gleichstrommotor 30 ein- oder ausgeschaltet, indem das erste Schaltelement 14 in den leitenden oder sperrenden Zustand gebracht wird.

Im leitenden Zustand des Schaltelements 14 fließ ein Strom durch den Gleichstrommotor 30, der insbesondere durch den Widerstandswert des Widerstandselements 12 festgelegt wird. Dieser Widerstandswert wird so gewählt, dass beim Einschalten über das erste Schaltelement 14 der Elektromotor 30 seinen Arbeitspunkt erreicht. Besitzt der Elektromotor 30 beispielsweise seinen Arbeitspunkt bei 13 A und ist die an den Anschlussklemmen 15 anliegende Spannung 13 V, handelt es sich um eine 1 Ω-Last, so dass der Widerstandswert beispielsweise ebenfalls auf 1 Ω gesetzt wird.

Wird das erste Schaltelement 14 eingeschaltet, arbeitet der Gleichstrommotor 30 bei einer solchen Auslegung des Widerstandselements 12 mit 25 % der Leistung.

Um die Leistung des Gleichstrommotors 30 nun zu verändern, wird das zweite Schaltelement 18 getaktet. Dieses getaktete Ansteuerungssignal 44 liefert die Ansteuerungsschaltung 40. Die Frequenz dieses getakteten Signals liegt vorzugsweise bei 20 kHz. Durch Verändern des Ein/Aus-Schaltverhältnisses des zweiten Schaltelements 18 innerhalb einer Taktperiode lässt sich die Leistung des Gleichstrommotors 30 einstellen. Bei dem Ansteuerungssignal 44 handelt es sich somit um ein Pulsweitenmoduliertes Signal.

Durch diese Pulsweiten-Modulation des Ansteuerungssignals 44 zwischen 0 und maximal 100 % lässt sich der Arbeitspunkt des Gleichstrommotors 30 von 25 % bei der vorgenannten Einstellung des Widerstandswerts des Widerstandselements 12 bis auf 100 % verändern. Bedingt durch die Induktivität des Gleichstrommotors stellt sich ein mittlerer Strom ein, der sich auf die beiden Schaltelemente T1 und T2 entsprechend dem Tastverhältnis des Ansteuerungssignals 44 verteilt.

Der durch den Gleichstrommotor 30 fließende Strom fließt folglich bei eingeschaltetem zweiten Schaltelement 18 durch dieses und ansonsten durch das erste Schaltelement 14.

Der durch das Widerstandselement 12 und das erste Schaltelement 14 fließende Strom verursacht einen Spannungsabfall U_{R}, der für eine Regelung und Überwachung des Gleichstrommotors 30 verwendet werden kann.

Ist der Gleichstrommotor 30 beispielsweise blockiert oder schwergängig, verändert sich sein Arbeitspunkt, und der Strom durch den Gleichstrommotor 30 steigt an. Dieser ansteigende Strom führt jedoch auch zu einem Anstieg des Spannungsabfalls U_{R}. Überschreitet nun die Spannung U_{R} einen vorgegebenen Grenzwert, kann daraus auf einen Fehler geschossen werden. Darüber hinaus ist es natürlich auch denkbar, die Spannung U_{R} zu der an den Anschlussklemmen 15 liegenden Versorgungsspannung ins Verhältnis zu setzen, wobei dann auf einen Fehler rückgeschlossen werden kann, wenn dieses Verhältnis sich unzulässig ändert.

In Fig. 3 ist eine Weiterbildung der vorgenannten Steuerschaltung als Blockschaltbild dargestellt, bei der die identische Steuerschaltung 10 um eine Signalaufbereitungsschaltung 50 ergänzt ist. Diese Signalaufbereitungsschaltung 50 ist eingangsseitig an der Reihenschaltung aus Widerstandselement 12 und erstem Schaltelement 14 angeschlossen, so dass die Signalaufbereitungsschaltung die Spannung U_{R} abgreift. Zwischen den beiden Eingangsanschlüssen der Signalaufbereitungsschaltung 50 liegt eine Reihenschaltung aus einer Diode 52 und einer Parallelschaltung aus einem Widerstandselement 54 und einem Kondensator 56. Diese Signalaufbereitungsschaltung 50 dient insbesondere zur Glättung des gemessenen Spannungsabfall-Signals U_{R}.

Da während der Leitendphase des zweiten Schaltelements 18 der Spannungsabfall U_{R} im Wesentlichen 0 V beträgt, ist es bei einer hundertprozentigen Pulsweiten-Modulation des Ansteuerungssignals 44 erforderlich, das Schaltelement 18 in bestimmten Zeitabständen kurz zu takten, z.B. zwischen 90 bis 99 %, so dass während dieser kurzen Zeitdauer der Strom über das Widerstandselement 12 und das erste Schaltelement 14 fließen kann. Der dadurch verursachte Spannungsabfall kann dann wie zuvor erwähnt abgegriffen und gemessen werden, um abhängig von der Auswertung bestimmte weitere Schritte einzuleiten.

Das Widerstandselement 12 wird vorzugsweise im Luftstrom des Gleichstrommotors 30 angeordnet, um eine entsprechende erforderliche Kühlung zu erfahren. Bei dem Widerstandselement 12 handelt es sich um einen üblichen Widerstandstyp, der einer entsprechenden Belastung widersteht.

Das Widerstandselement 12 kann jedoch auch als so genannter PTC-Widerstand ausgeführt sein, um einen Selbstschutz zu erreichen. Ist der Gleichstrommotor 30 beispielsweise blockiert, heizt sich der PTC-Widerstand auf und erhöht seinen Widerstand. Mit dieser Widerstandserhöhung geht ein entsprechender Spannungsabfall U_{R} einher, der wiederum gemessen werden kann.

## Patentansprüche

1. Steuerschaltung für einen induktiven, elektrischen Verbraucher (20), insbesondere einen Gleichstrommotor (30) einer Lüftereinrichtung an einer Verbrennungskraftmaschine, mit einem ersten Schaltelement (14), das zusammen mit dem anschließbaren Verbraucher (20) in Reihe zwischen zwei Anschlussklemmen für die Energieversorgung liegt, wobei ein Widerstandselement (12) in Reihe mit dem ersten Schaltelement (14) und ein zweites Schaltelement (18) parallel zu der Reihenschaltung aus Widerstandselement (12) und erstem Schaltelement (14) geschaltet ist, wobei eine Pulsweiten-Ansteuervorrichtung (40) das zweite Schaltelement (18) ansteuert und damit die Leistung des Verbrauchers (20) einstellt, und wobei eine Signalaufbereitungs- und Spannungsmessvorrichtung vorgesehen ist, die parallel zu dem Widerstandselement (12) liegt und den Spannungsabfall an diesem Widerstandselement (12) als Signal zur Weiterverarbeitung abgreift, **dadurch gekennzeichnet, dass** das Widerstandselement (12) als PTC-Widerstand ausgebildet ist und dass die Signalaufbereitungs- und Spannungsmessvorrichtung bei einem Überschreiten der gemessenen Spannung über einen vorgegebenen Wert ein Steuersignal zum Abschalten des zumindest einen Schaltelements (14) erzeugt.

2. Steuerschaltung nach Anspruch 1, **dadurch gekennzeichnet, dass** der Widerstandswert des Widerstandselements (12) entsprechend dem Widerstandswert des Verbrauchers (20) am Arbeitspunkt gewählt wird.

3. Steuerschaltung nach Anspruch 1 oder 2, **dadurch gekennzeichnet, dass** das vorzugsweise im Luftstrom des Gleichstrommotors (30) angebrachte Widerstandselement (12) gekühlt ist.

4. Steuerschaltung nach einem der vorhergehenden Ansprüche,
**dadurch gekennzeichnet, dass** das zweite Schaltelement (18) ein Halbleiter-Schaltelement, insbesondere ein Feldeffekt-Transistor ist.

5. Steuerschaltung nach einem der vorhergehenden Ansprüche,
**dadurch gekennzeichnet, dass** die PWM-Vorrichtung Impulse mit einer Frequenz von 20 kHz erzeugt.

6. Steuerschaltung nach einem der vorhergehenden Ansprüche,
**dadurch gekennzeichnet, dass** die PWM-Vorrichtung so ausgebildet ist, dass das zweite Schaltelement (18) zumindest in bestimmten vorgebbaren Zeitabständen getaktet wird, um am Widerstandselement (12) eine Mess-Spannung abgreifen zu können.

## Claims

1. Control circuit for an inductive, electrical load (20), in particular a DC motor (30) of a fan device in an internal combustion engine, having a first switching element (14) which, together with the connectable load (20), is connected in series between two connection terminals for the power supply, with a resistance element (12) being connected in series with the first switching element (14), and a second switching element (18) being connected in parallel with the series circuit comprising the resistance element (12) and the first switching element (14), with a pulse-width drive apparatus (40) driving the second switching element (18) and thereby setting the power of the load (20), and with a signal conditioning and voltage measuring apparatus being provided, this apparatus being connected in parallel with the resistance element (12) and tapping off the voltage drop across this resistance element (12) as a signal for further processing, **characterized in that** the resistance element (12) is in the form of a PTC resistor, and **in that** the signal conditioning and voltage measuring apparatus generates a control signal for switching off the at least one switching element (14) when the measured voltage exceeds a predefined value.

2. Control circuit according to Claim 1, **characterized in that** the resistance value of the resistance element (12) is selected in accordance with the resistance value of the load (20) at the operating point.

3. Control circuit according to Claim 1 or 2, **characterized in that** the resistance element (12) which is preferably mounted in the air stream of the DC motor (30) is cooled.

4. Control circuit according to one of the preceding claims, **characterized in that** the second switching element (18) is a semiconductor switching element, in particular a field-effect transistor.

5. Control circuit according to one of the preceding claims, **characterized in that** the PWM apparatus generates pulses with a frequency of 20 kHz.

6. Control circuit according to one of the preceding claims, **characterized in that** the PWM apparatus is designed such that the second switching element (18) is clocked at least at specific predefinable time intervals, in order to be able to tap off a measurement voltage at the resistance element (12).

## Revendications

1. Circuit de commande pour consommateur électrique inductif (20), en particulier pour un moteur (30) à courant continu d'un dispositif de ventilation d'un moteur à combustion interne, présentant :
un premier élément de commutation (14) raccordé en série entre deux bornes de raccordement d'alimentation en énergie en même temps que le consommateur (20) raccordable,
un élément de résistance (12) raccordé en série avec le premier élément de commutation (14) et
un deuxième élément de commutation (18) raccordé en parallèle au circuit série constitué de l'élément de résistance (12) et du premier élément de commutation (14),
un dispositif (40) de commande par largeur d'impulsions qui commande le deuxième élément de commutation (18) et détermine ainsi la puissance consommée par le consommateur (20),
un dispositif de préparation de signaux et de mesure de tension raccordé en parallèle à l'élément de résistance (12) et saisissant la chute de tension aux bornes de cet élément de résistance (12) comme signal destiné à être encore traité,
**caractérisé en ce que**
l'élément de résistance (12) est configuré comme résistance PTC et
**en ce que** le dispositif de préparation des signaux et de mesure de tension forme un signal de commande qui débranche le ou les éléments de commutation (14) lorsque la tension mesurée dépasse une valeur prédéterminée.

2. Circuit de commande selon la revendication 1, **caractérisé en ce que** la valeur de la résistance de l'élément de résistance (12) est sélectionnée en correspondance à la valeur de résistance du consommateur (20) au point de travail.

3. Circuit de commande selon les revendications 1 ou 2, **caractérisé en ce que** l'élément de résistance (12), de préférence installé dans l'écoulement d'air du moteur (30) à courant continu, est refroidi.

4. Circuit de commande selon l'une des revendications précédentes, **caractérisé en ce que** le deuxième élément de commutation (18) est un élément de commutation à semi-conducteur, en particulier un transistor à effet de champ.

5. Circuit de commande selon l'une des revendications précédentes, **caractérisé en ce que** le dispositif PWM de modulation de la largeur des impulsions forme des impulsions d'une fréquence de 20 kHz.

6. Circuit de commande selon l'une des revendications précédentes, **caractérisé en ce que** le dispositif PWM est configuré de telle sorte qu'au moins à des intervalles de temps prédéterminés, le deuxième élément de commutation (18) soit cadencé pour pouvoir saisir une tension de mesure sur l'élément de résistance (12).
